# EUROPEAN PATENT APPLICATION

(11) **EP 4 518 243 A1**
(43) Date of publication of application: **05.03.2025**
(21) Application number: 23193916.6
(22) Date of filing: 29.08.2023
(51) Int. Cl.: H04L 9/32, H04L 9/08

(54) **METHOD AND DEVICE FOR GUARANTEEING AUTHENTICITY OF DIGITAL DATA**

(71) Applicant: Siemens Aktiengesellschaft, 80333 München (DE)
(72) Inventor: Aghaie, Anita, 81379 Munich (DE); Aschauer, Hans, 81829 München (DE); Böffgen, Pascale, 81247 München (DE); Che, Kai, 80636 München (DE); De Santis, Fabrizio, 80634 München (DE); Falk, Rainer, 85435 Erding (DE); Furch, Andreas, 85354 Freising (DE); Safieh, Malek, 81539 München (DE); Schneider, Daniel, 80796 München (DE); Vaira, Antonio, 81379 München (DE); Zeschg, Thomas, 81543 München (DE); Zwanzger, Johannes, 85579 Neubiberg (DE)
(74) Representative: Siemens Patent Attorneys

(57) **Abstract**

In the method for guaranteeing authenticity of digital data, data are considered that are digitally signed with a pre-quantum signature and the method comprises the steps of generating a time stamp and digitally signing the pre-quantum signature together with the time stamp using a post-quantumg signature.

## Description

This invention related to a method and device for guaranteeing authenticity of digital data.

Digital signature schemes are public-key cryptographic algorithms which provide authenticity and integrity of digital artifacts. They are commonly used to protect digital data, such as digital documents, firmware updates or software updates, against manipulation attacks. As of today, the security of current digital signature schemes, such as RSA, DSA, ECDSA, EdDSA, relies on the security of two main computationally hard problems: the integer factorization or the discrete logarithm problem. These problems, however, are known to be solvable efficiently with the aid of a Cryptographically Relevant Quantum Computer (in the subsequent description abbreviated as CRQC). Thus, it has to be expected that classic digital signatures based on the integer factorization or the discrete logarithm problems could be forged in the future.

We refer to current classical digital signature algorithms as pre-quantum signature schemes in what follows. In contrast, digital post-quantum signature schemes, e.g., CRYSTALS-Dilithium, Falcon, SPHINCS+, XMSS, or LMS, are new cryptographic algorithms that are considered to be secure against quantum attacks, i.e., cryptanalytic attacks which run on a cryptographically relevant quantum computer. Post-quantum signature algorithms are expected to replace pre-quantum digital signature algorithms in the future.

Since pre-quantum digital signatures considered secure today can only be forged with the aid of a CRQC, which is not available yet, and as a migration to post-quantum cryptography did not happen yet, pre-quantum digital signatures are still generated. However, since digital pre-quantum signatures may be maliciously forged in the future, pre-quantum signatures generated before the availability of a CRQC cannot be trusted any more.

Thus, it is the problem of the invention, to provide an improved method for guaranteeing authenticity of digital data. In particular, the method should guarantee the authenticity of digital data which can be trusted even when cryptographically relevant quantum computers become available. Likewise, it is the problem of the invention to provide a device that can carry out the method according to the invention.

This problem of the invention is solved with a method as claims in claim 1 and with a device as claimed in claim 12. Preferred aspects and embodiments of the invention are contained in the dependent claims, the following description and in the drawing.

In the method for guaranteeing authenticity of digital data according to the invention, are considered that are digitally signed with a pre-quantum signature. The method according to the invention comprises the steps of generating a first time stamp and digitally signing the pre-quantum signature together with the time stamp using a post-quantumg signature.

In the method according to the invention, the time stamp can be either be generated with the generation of the digital pre-quantum signature or any later date, as long as it is available when signing with the post-quantum signature, such as immediately before digitally signing using the post-quantum signature.

Advantageously, the method according to the invention makes sure, that the digital pre-quantum signature existed before the availability of a CRQC, so that the safety of the digital pre-quantum signature before the availabilty of the CRQC can indeed be trusted. Hence the security of digital pre-quantum signatures, which have been generated before a CRQC can maliciously forge them, are preserved within the method according to the invention.

Advantageously, the method according to the invention allows to compare the time stamp with the time of an availability of a cryptographically relevant quantum computer. Thus, the first time stamp gives a clear indication, whether it would have been possible to forge the pre-quantum signature. In case the first time stamp dates before the availability of a cryptographically relevant quantum computer, the pre-quantum signature can be considered safe. Since the post-quantum signature remains basically unaffected by an availability of a cryptographically relevant quantum computer, the method allows to trust the pre-quantum signature even in those cases, in which a cryptographically relevant quantum computer is available.

In a preferred aspect of the method according to the invention, digitally signing data may include directly signing the data with a digital signature algorithm. In this aspect of the invention, the digital signature algorithm may be used in a way that many digital signature algorithms are widely implemented in.

In a likewise preferred aspect of the method according to the invention, digitally signing data may include digitally siging a hash-function of these data. Also in this aspect of the invention, the digital signature algorithm may be used in a way that many digital signature algorithms are widely implemented in. The signing of the hash of the data instead of directly signing the data themselves does not compromise the security of digital post-quantum signatures, since typical hash-functions are known to be post-quantum secure.

In a preferred aspect of the method according to the invention, digitally signing data may include digitially signing a root of a hash tree, particularly a Merkle tree, containing a hash of the data as a leaf. In this aspect of the invention, the structure of a Merkle tree containing a hash of the data as a leaf provides the opportunity to not only sign the data under consideration constituting the leaf, but singing multiple data at the same time with signing the roof, since hashes of multiple data could be implemented each as a leaf of the hash tree such as the Merkle tree.

In a preferred aspect of the method according to the invention, digitally signing the pre-quantum signature may include digitially signing a root of a hash tree, particularly a Merkle tree, containing a hash of the pre-quantum signature as a leaf. In this aspect of the invention, the structure of a Merkle tree containing the hash of the pre-quantum signature as a leaf provides the opportunity to not only sign the pre-quantum signature under consideration constituting the leaf, but singing multiple pre-quantum signatures at the same time with signing the roof, since hashes of multiple pre-quantum signatures could be implemented each as a leaf of the hash tree such as the Merkle tree.

In an advantageous aspect of the method according to the invention, the data have been digitally signed with the pre-quantum signature by the same entity that conducts the step of digitally signing the pre-quantum signature together with the time stamp using a post-quantum signature. In this aspect of the invention, only one entity is involved in guaranteeing the authenticity of the data.

Alternatively, and also advantagously, in an aspect of the method according to the invention, the data have been digitally signed with the pre-quantum signature by a different entity that conducts the step of digitally signing the pre-quantumg signature together with the time stamp using a post-quantum signature. In this case, a separate entity may be involved in signing with the pre-quantum signature and the post-quantum signature, respectively.

Optionally, in the method according to the invention, such data are considered that are digitally signed with a pre-quantum signature such that the data are digitally signed with the pre-quantum signature as a step of the method. In other words, the data that are digitally signed with the pre-quantum signature are not only considered, but provided by actually digitally signing the data with the pre-quantumg signature.

In a preferred method according to the invention, a second time stamp indicating the time of generating the post-quantum signature is generated and the step of digitally signing the pre-quantum signature together with the first time stamp using a post-quantumg signature involves also ditigally siging the second time stamp. In this case it is also verifiable that the digital post-quantum signature is generated before the availability of a cryptographically relevant quantum computer. Preferably, it can also be verified that the first timestamp indicates an earlier point in time than the second time stamp.

In the method for guaranteeing authenticity of digital data according to the invention, the data that are digitally signed with the pre-quantum signature. The pre-quantum signature is, according to the invention, digitally signed together with the time stamp using the post-quantum signature results from a method according to the invention as described above and is considered and checked with respect to the validity of the pre-quantum signature and the validity of the post-quantum signature and the time stamp and optionally also the second time stamp is/are compared to a reference time.

The reference time advantageusly is a time of an availability of a cryptographically relevant quantum computer. In this aspect of the invention, the time stamp gives a clear indication, whether it would have been possible to forge the pre-quantum signature. Optionally, the reference time may be adjusted to include a safety buffer.

The method according to the invetion is, in an advantageous and preferred aspect, implemented on a computer, preferably a classical computer.

The device according to the invention is advantageously configured to carry out the method for guaranteeing authenticity of digital data according to the invention as describled above.

The invention is described in more details in the embodiments described below and depicted in the drawings as follows::
- Fig. 1: shows a schematic sketch of the process of digitally signing data in a first embodiment and
- fig. 2: shows a schematic sketch of the process of digitally signing data in a second embodiment.

For the description of exampleous embodiments of the present invention, we will make use of the following notations, which denote denote mathematical variables and may not be confused with reference numerals:
- p = digital post-quantum signature algorithm
- σ = digital pre-quantum signature algorithm
- (skp,pkp) = post-quantum key pairs
- (skσ,pkσ) = pre-quantum key pairs
- sp = post-quantum digital signature
- so = pre-quantum digital signature
- H = hash function
- A = artifact to be signed (e.g., firmware update)
- S = signer of an artifact A
- V = verifier of a digital signature
- Ts = trusted timestamp
- T0 = time instant after which pre-quantum signatures.

In a first embodiment, the main idea is to use a digital post-quantum signature algorithm to countersign digital pre-quantum signatures and create a post-quantum secure cryptographic binding between a digital pre-quantum signature and its time of generation. In this way, the verifier can have assurance that a pre-quantum signature was created before a cryptographically relevant quantum computer (CRQC) became available.

The digital pre-quantum signature protects, besides the signed artefact, a first digital timestamp, indicative of the point in time when the pre-quantum digital signature was created. The post-quantum digital signature protects the artifact and the first timestamp and in addition a second timestamp, indicative of the point in time when the post-quantum digital signature was created. The artifact signed with the digital pre-quantum signature is accepted as valid if the first timestamp as well as the second timestamp indicate each a point in time being earlier than a reference point in time indicative of the actual or assumed existence of a CRQC. Furthermore, it can be verified that the first timestamp indicates an earlier point in time than the second time stamp.

Furthermore, it can be verified that the cryptographic signature algorithm and/or the used key length used for the digital pre-quantum signature is considered as "strong" at the point in time indicated by the second time stamp. "Strong" means that the pre-quantum signature algorithm/key length was covered by a crypto guideline as acceptable, where the crypto guideline was valid at the point in time as indicated by the second time stamp. Optionally, the post-quantum digital signature protects in addition an information on the crypto guideline that was used to verify, during the creation of the countersigning post-quantum signature, that the cryptographic algorithm and/or key length of the pre-quantum digital signature was accepted as "strong" at the point in time indicated by the second time stamp, i.e., at the point in time when the countersigning post-quantum signature was created. The information on the crypto guideline may be a URI, a URL and/or a cryptographic hash value of the crypto guideline used for the crypto algorithm check. Note that the signer of the post-quantum signature only must affirm that the artefact together with its pre-quantum signature has been seen at the time of the second timestamp, i.e., none of the knowledge that was necessary for the first signer to issue the pre-quantum signature is required. The only thing in common between the first and the second signer is that they must be verifiable as trusted by the verifying party.

To put this into perspective: let T0 be the time from that an attacker can forge pre-quantum digital signatures, i.e., using a CRQC. We propose a mechanism to cryptographically bind a digital pre-quantum signature to a certain time Ts using a post-quantum digital signature algorithm such that the validity of the pre-quantum digital signature can be safely verified before and after T0.

This can be achieved with the following main steps:
1. A client C securely sends a hash H(A) of an artifact A, representing the data to authenticate, to a signer S.
2. The signer S computes a pre-quantum signature s0=σ(H(A)) using a pre-quantum secret key skσ.
3. The signer S countersigns the pre-quantum signature s0 with a post-quantum digital signature algorithm s1= p(s0, Ts) using a post-quantum secret key skp, hence creating a cryptographic binding between s0 and a trusted timestamp Ts.
4. The signer S transmits the triple (s0, s1, Ts) back to client C.
5. The client C sends the tuple (s0, s1, Ts, A) to a verifier V.
6. The verifier V validates the pre-quantum signature s0 with a corresponding pre-quantum public key pkσ on the hash H(A), verifies the signature s1 with a corresponding post-quantum public key pkp on the pre-quantum signature s0 and Ts, and finally accepts the artifact A if Ts<T0+d, where d is a certain configurable negative/positive quantity.

Note that in Step 1, the hash H(A) is sent instead of the artifact A itself, because the hash H(A) is typically smaller in size than the artifact A and the signer S does not get to know the artifact A itself, in this way.

Note that in Step 6, the variable d is used to adjust the time T0 regulating the accept condition Ts<(T0+d), since T0 is a moving target which cannot be determined precisely. In some embodiments, the client C and the signer S might be co-located in a single node.

### Variants of the previously described main embodiment:

In variant of the previously described examplous embodiment of the invention, there are two separate signing entities, e.g., two hardware security modules (HSMs): a pre-quantum signer S0 which can only generate pre-quantum signatures and a post-quantum signer S1 which can only generate post-quantum signatures. Hence, the main steps of the invention are modified as follows:
1. A client C securely sends a hash H(A) of an artifact A to the pre-quantum signer S0.
2. The pre-quantum signer S0 computes a pre-quantum signature s0=σ(H(A)) using a pre-quantum secret key skσ and securely transmits s0 to the post-quantum signer S1.
3. The post-quantum signer S1 countersigns the pre-quantum signature s0 with a post-quantum digital signature s1= p(s0, Ts) binding it to a trusted timestamp Ts using a post-quantum secret key skρ.
4. The signer S1 transmits the triple (s0, s1, Ts) back to C.
5. The client C sends the tuple (s0, s1, Ts, A) to the verifier V.
6. The verifier V validates the pre-quantum signature s0 with a corresponding pre-quantum public key pkσ on the hash H(A), verifies the signature s1 with a corresponding post-quantum public key pkp on the pre-quantum signature s0 and Ts, and finally accepts the artifact A if Ts<T0.

This variant has the advantage that, e.g., for legacy reasons, the pre-quantum signer, e.g., an HSM, does not have to be migrated to post-quantum cryptography, but it is sufficient to add a post-quantum signer, e.g., another HSM which supports post-quantum cryptography, to the signing infrastructure.

In another variant of the main embodiment of the invention, there are two separate verifying entities: a pre-quantum verifier V0 which can only verify pre-quantum signatures and a post-quantum verifier V1 which can only verify post-quantum signatures. Hence, the main steps of the invention are modified as follows:
1. A client C securely sends the hash H(A) of an artifact A to a signer S.
2. The signer S computes the pre-quantum signature s0=σ(H(A)) using a pre-quantum secret key skσ.
3. The signer S countersigns the pre-quantum signature s0 with a post-quantum digital signature s1= p(s0, Ts) binding it to a trusted timestamp Ts using a post-quantum secret key skρ.
4. The signer S transmits the triple (s0, s1, Ts) back to C.
5. The client C sends the tuple (s0, s1, Ts, A) to the verifier V0.
6. The verifier V0 verifies the pre-quantum signature s0 with the pre-quantum public key pkσ on the hash H(A), securely sends the triple (s0, s1, Ts) to a post-quantum verifier V1 which verifies the signature s1 with the post-quantum public key pkp, checks if Ts<T0, and securely informs V0 about the results. If Ts<T0 was successful, then V0 accepts the validity of the artifact A.

This variant has the advantage that the pre-quantum verifier, e.g., a product in the field, does not have to be migrated to post-quantum cryptography, e.g., for legacy reasons, but it is sufficient to add a post-quantum verifier, e.g., a trusted proxy/gateway, in the perimeter of the trusted network. Alternatively steps 5. and 6. can be performed as follows:
5. The client C sends the tuple (s0, s1, Ts, A) to the verifier V1.
6. The verifier V1 validates the post-quantum signature s1 with the post-quantum public key pkσ on the hash H(A) and checks if Ts<T0, securely sends the pair (s0, A) to a pre-quantum verifier V0 which verifies the signature s0 with the pre-quantum public key pkσ and accepts A if the signature verification is also successful.

This variant has the advantage over the previous one that it requires less interactions between V0 and V1.

In another variant of the main embodiment of the invention, a Merkle tree is used to provide the following advantages:
- The verifier can accept a batch of pre-quantum signatures (s0)ᵢ by verifying only one post-quantum signature (s1)ⱼ and the condition Ts<T0+d.
- If the post-quantum digital signature algorithm p used for generating a post-quantum countersignature (s1)ⱼ is broken in the future, then it is possible to countersign only the Merkle tree root to retain security of previous signatures, hence avoiding the need to countersign previously generated signatures.
- A third-party public auditor can audit the integrity of the public log of digital signatures by computing the Merkle tree root of the Merkle tree and verifying its digital signature. This approach could be used to offload the computation of the Merkle tree validation from the verifier in Step 6.

This variant using a Merkle tree works as follows:
1. A client C securely sends a hash H(A) of an artifact A to a signer S.
2. The signer S adds the hash H(A) to a Merkle tree, where H(A) is the leaf of the tree, by updating a Merkle tree root R of the Merkle tree and computes a pre-quantum signature s0=σ(R) of the Merkle tree root R using a pre-quantum secret key skσ.
3. The signer S countersigns the pre-quantum signature s0 with a ditigal post-quantum signature s1= p(s0, Ts) using a post-quantum secret key skp, hence creating a cryptographic binding between s0 and a trusted timestamp Ts
4. The signer S transmits the tuple (s0, s1, Ts) back to C
5. The client C sends the tuple (s0, s1, Ts, A) to the verifier V
6. The verifier computes H(A), retrieves all necessary leaves or intermediate nodes (e.g., authentication path) required to calculate the root of the Merkle tree R. Then V validates the pre-quantum signature s0 with a corresponding pre-quantum public key pkσ on the Merkle tree root R, verifies the post-quantum signature s1 with a corresponding post-quantum public key pkp on the pre-quantum signature s0 and the timestamp Ts, and finally accepts the artifact A if Ts<T0+d.

Note that the Merkle tree computed in Step 2 can be either stored locally by the signer S or sent back to the client C in Step 4 or published onto a public log repository, which we call signature transparency log in what follows. In any cases, the Merkle tree must be made available to the verifier V in Step 6.

Further note that the Merkle tree can be either specific for a certain client C or global for all clients. If the Merkle tree is client specific, then client specific audits can be performed.

In another variant of the main embodiment of the invention, a Merkle tree is used as follows:
1. A client C securely sends a hash H(A) of an artifact A to a signer S.
2. The signer S computes a pre-quantum signature s0=σ(H(A)) using a pre-quantum secret key skσ.
3. The signer S adds s0 to a Merkle tree by updating a Merkle tree root R of the Merkle tree, and signs the Merkle tree root R with a post-quantum digital signature s1= p(R, Ts) using a post-quantum secret key skp, hence creating a cryptographic binding between R and a trusted timestamp Ts
4. The signer S transmits the triple (s0, s1, Ts) back to C.
5. The client C sends the tuple (s0, s1, Ts, A) to the verifier V.
6. The verifier V computes the hash H(A), retrieves all necessary leaves or intermediate nodes, e.g., authentication path, required to calculate the Merkle tree root R of the Merkle tree. Then V validates the pre-quantum signature s0 with a corresponding pre-quantum public key pkσ on the Merkle tree root R, verifies the signature s1 with a corresponding post-quantum public key pkp on the pre-quantum signature s0 and timestamp Ts, and finally accepts the artifact A if Ts<T0+d.

This variant is similar to the previous variant with the Merkle tree, but has the additional advantage that the verifier V can skip the verification of the Merkle tree before T0:
In another variant of the main embodiment of the invention, the pre-quantum signature s0 is countersigned by two or more post-quantum digital signature algorithms, e.g., s1= p2(p1(s0), Ts) and s2= p1(p2(s0), Ts). This variant has the advantage that security can be preserved as long as at least one of the post-quantum digital signature algorithms p1 or p2 is secure.

In another variant of the main embodiment of the invention, step 3 of the main embodiment is modified as follows:
3. The signer S countersigns the pre-quantum signature s0 with a post-quantum digital signature s1= p(s0, H(A), Ts) using a post-quantum secret key skp, hence creating a cryptographic binding between s0, H(A), and a trusted timestamp Ts.

This variant has the advantage that the post-quantum signature also binds the pre-quantum signature to the hash of the artifact H(A) together with the timestamp Ts. Exemplary deployment of the invention in a migration scenario:
In this paragraph, an exemplary deployment of the invention using different signer, resp. verifier, entities is described. This exemplary deployment highlights the practical usefulness of the invention in a migration scenario, i.e., when the signer and/or the verifier "are not yet" or "cannot" be migrated to post-quantum cryptography, i.e., when the signer, resp. verifier, cannot generate, or resp. validate, post-quantum digital signatures either because a migration to post-quantum cryptography did not happen yet or it cannot be performed at all. This scenario also covers the cases where some devices are progressively migrated to post-quantum cryptography and/or some devices cannot be migrated to post-quantum cryptography, e.g., in brown fields.

The deployment utilizes different signer, resp. verifier, components, referred to as post-quantum gateways, which are in the same trusted network as a signer S, resp. a verifier V, to generate, resp. validate, post-quantum digital signatures. We denote as GWS the post-quantum gateway for the signer S and as GWV the post-quantum gateway for the verifier V. In the exemplary considered scenario, the signer S is a digital signing service deployed in a trusted network, while the verifier V is a device deployed in a customer network. The artifact A can be, e.g., a firmware update, containing a post-quantum X.509 root certificate and/or a post-quantum firmware update mechanism itself.

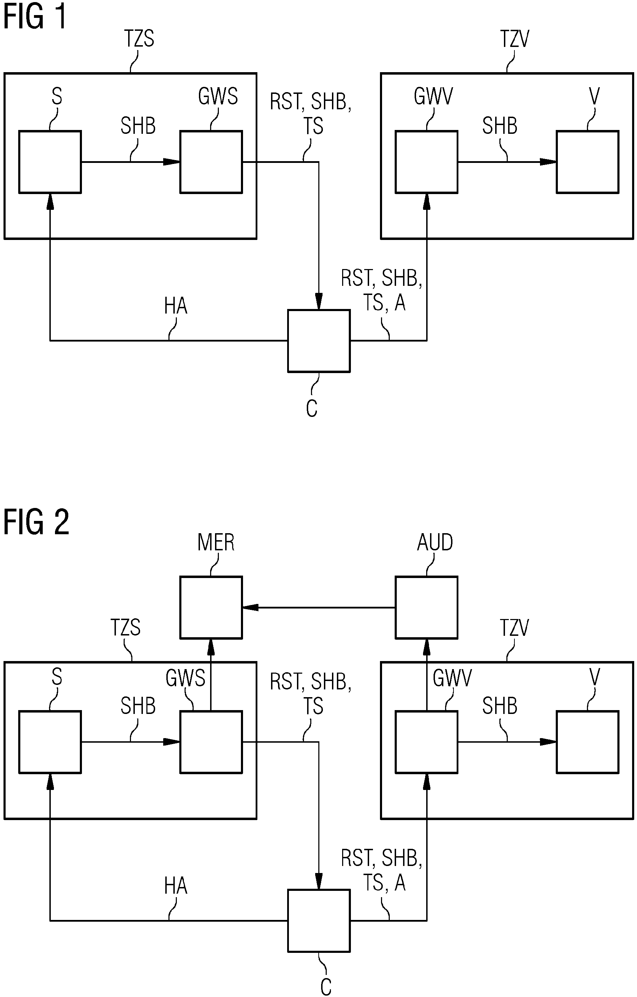

The process of signing and verifying an artifact A is depicted in Figure 2 and 3 and consists of the steps described as follows. Where we now also add reference signs for those terms and variables depicted in the figures, which do not consist of a single letter. The timestamp is labelled as TS in what follows:
1. A client C sends a hash H(A), labelled HA, of an artifact to the pre-quantum signer S, a pre-quantum signing service.
2. The pre-quantum signing service S signs the hash H(A), labelled as HA, and forwards a signature σ(H(A)), labelled as SHB, to the post-quantum gateway GWS located in the same trusted network, the trusted zone TZS.
3. The post-quantum gateway GWS generates a post-quantum signature ρ(σ(H(A)), TS), labelled as RST, and returns the triple (ρ(σ(H(A)), TS), σ(H(A)), TS), labelled as RST, SHB, TS, to the client C which makes it available to the post-quantum gateway GWV, located in the trusted zone TZV.
4. The post-quantum gateway GWV performs the post-quantum signature validation and additionally checks whether the pre-quantum signature was calculated before T0, the time, when an CRQC is available.
5. The post-quantum GWV, upon successful validation of ρ(σ(H(A)), Ts) RST, TS, A delivers (σ(H(A)), A) SHB, A to a device V which validates the signatures.

A third-party public auditor AUD can audit the integrity of the public log MER of digital signatures in case a Merkle tree ist used as a public log.

## Claims

1. Method for guaranteeing authenticity of digital data (A), in which data are considered that are digitally signed with a pre-quantum signature (SHB), comprising the steps of generating a first time stamp (TS) and digitally signing the pre-quantum signature together with the first time stamp (TS) using a post-quantumg signature (RST).

2. Method according to claim 1, in which digitally signing data (A) may include directly signing the data (A) with a digital signature algorithm.

3. Method according to claim 1 or 2, in which digitally signing data may include digitally siging a hash-function (HA) of these data (A).

4. Method according to claim 1 or 3, in which digitally signing data (A) may include digitially signing a root of a hash tree (MER), particularly a Merkle tree, containing a hash of the data (A) as a leaf.

5. Method according to claim 1 or 3, in which digitally signing the pre-quantum signature (SHB) may include digitially signing a root of a hash tree (MER), particularly a Merkle tree, containing a hash of the pre-quantum signature (SHB) as a leaf.

6. Method according to one of the preceding claims, in which the data (A) have been digitally signed with the pre-quantum signature (SHB) by the same entity that conducts the step of digitally signing the pre-quantum signature (SHB) together with the time stamp (TS) using a post-quantum signature (RST) .

7. Method accoding to one of the claims 1 to 6, in which the data (A) have been digitally signed with the pre-quantum signature (SHB) by a different entity that conducts the step of digitally signing the pre-quantumg signature (SHB) together with the first time stamp (TS) using a post-quantum signature (RST).

8. Method according to one of the preceding claims, in which the data (A) are considered that are digitally signed with a pre-quantum signature (SHB) such that the data (A) are digitally signed with the pre-quantum signature (SHB).

9. Method according to one of the preceding claims, wherein a second time stamp indicating the time of generating the post-quantum signature (RST) is generated and wherein the step of digitally signing the pre-quantum signature (SHB) together with the first time stamp using a post-quantumg signature (RST) involves also ditigally siging the second time stamp.

10. Method for guaranteeing authenticity of digital data, in which the data (A) that are digitally signed with the pre-quantum signature (SHB) and whose pre-quantum signature (SHB) is digitally signed together with the first time stamp (TS) using the post-quantum signature (RST) as resulting from one of the claims 1 to 9 are considered and checked with respect to the validity of the pre-quantum signature (SHB) and the validity of the post-quantum signature (RST) and in which the first time stamp (TS) and optionally the second time stamp is/are compared to a reference time.

11. Method according to one of the preceding claims, which is implemented on a computer.

12. Device, configured to carry out a method for guaranteeing authenticity of digital data (A) according to one of the preceding claims.
